# EUROPEAN PATENT SPECIFICATION

(11) **EP 2 318 476 B1**
(45) Date of publication and mention of the grant of the patent: **03.01.2018**
(21) Application number: 09786582.8
(22) Date of filing: 13.07.2009
(51) Int. Cl.: C09K 11/77, G21K 4/00, C04B 35/547, C04B 35/645

(54) **Gd2O2S MATERIAL FOR USE IN CT APPLICATIONS**
GD2O2S-MATERIAL ZUR VERWENDUNG IN CT-ANWENDUNGEN
MATÉRIAU À BASE DE GD2O2S DESTINÉ À ÊTRE UTILISÉ DANS DES APPLICATIONS DE TOMOGRAPHIE ASSISTÉE PAR ORDINATEUR (CT)

(30) Priority: 23.07.2008 CN 200810142960
(43) Date of publication of application: 11.05.2011
(73) Proprietor: Koninklijke Philips N.V., 5656 AE Eindhoven (NL); Philips Intellectual Property & Standards GmbH, 20099 Hamburg (DE)
(72) Inventor: RONDA, Cornelis, Reinder, 52066 Aachen (DE); ZEITLER, Guenter, 52066 Aachen (DE); SCHREINEMACHER, Herbert, 52066 Aachen (DE); CONRADS, Norbert, 52066 Aachen (DE); WIECHERT, Detlef Uwe, 52066 Aachen (DE)
(74) Representative: van Velzen, Maaike Mathilde
(86) International application number: PCT/IB2009/053025
(87) International publication number: WO 2010/010480

(56) References cited:
- EP-A2- 0 139 192
- EP-A2- 1 223 464
- US-A- 3 833 862
- US-A- 5 216 252
- US-A- 5 451 793

## Description

### FIELD OF THE INVENTION

The present invention is directed to a radiation detector comprising fluorescent Gadolinium containing powder especially for use in CT and/or X-ray applications.

The invention still further relates to a use of said detector for detecting ionizing radiation.

### BACKGROUND OF THE INVENTION

Fluorescent members for detecting high energy radiation contain a phosphor that can absorb the radiation and convert it into visible light. The luminescent emission thereby generated is electronically acquired and evaluated with the assistance of light sensitive systems such as photodiodes or photomultipliers. Such fluorescent members can be manufactured of single-crystal materials, for example, doped alkali halides. Non-single-crystal materials can be employed as powdered phosphor or in the form of ceramic members manufactured there from.

A typical fluorescent ceramic material employed for detecting high energy radiation is Pr-doped Gd₂O₂S. Another material is Eu-doped (Y,Gd)₂O₃.

Although the materials used in the present state of the art have their advantages, there is still a constant need for further alternative materials which are useful as fluorescent materials in CT and/or X-ray applications.

US 3833862 A discloses a single crystal laser material consisting essentially of at least one oxysulfide selected from the group consisting of lanthanum oxysulfide, yttrium oxysulfide, gadolinium oxysulfide and lutetium oxysulfide. From about 0.2 percent to 3 percent of the host metal ions have been replaced by trivalent neodymium ions.

EP 1 223 464 A2 discloses light-weight imaging assemblies for oncology portal imaging.

### SUMMARY OF THE INVENTION

A first object of the present invention is to provide a radiation detector comprising scintillating material for use in CT and/or X-ray applications. The detector comprises a Gd₂O₂S: Nd fluorescent material, wherein the Nd³⁺ concentration is between ≥ 10 and ≤ 2000 wt. ppm. The detector is preferably an X-ray detector, CT-detector or Electronic Portal Imaging detector.

The invention is defined in the appended claims.

A Gd₂O₂S: Nd fluorescent material may be provided.

Nd may be used as emitter in one or more of the following materials: Gd₂O₂S, (Y,Gd)₂O₃, Lu₃Al₅O₁₂,Y₃Al₅O₁₂, Lu₃Ga₅O₁₂.

The term "emitter" in the sense of the present invention especially means and/or includes that Nd is capable of emitting light in the wavelength area of 400 to 1200 nm upon incidence of X-ray radiation.

The inventors have found out that surprisingly the incorporation of Nd in Gd₂O₂S and/or (Y,Gd)₂O₃, Lu₃Al₅O₁₂,Y₃Al₅O₁₂, Lu₃Ga₅O₁₂ materials leads to a fluorescent material with good emitting characteristics. Especially one advantage is that in most applications of the present invention there is no or hardly no "afterglow".

It should be noted that the materials of the present invention may be contaminated by other rare-earth ions. Typical examples are Pr, Dy, Sm, Ce, Eu, Yb. The concentrations of these ions should preferably be kept very low, preferably less than 0.5 mole ppm.

The Gd₂O₂S: Nd fluorescent material and/or the host material of the material maybe provided where Nd is used as emitter and is provided as a ceramic material.

The term "ceramic material" in the sense of the present invention means a crystalline or polycrystalline compact material or composite material with a controlled amount of pores or which is pore free.

The term "polycrystalline material" in the sense of the present invention means and/or includes especially a material with a volume density larger than 90 percent of the main constituent, consisting of more than 80 percent of single crystal domains, with each domain being larger than 0.5 µm in diameter and may have different crystallographic orientations. The single crystal domains may be connected by amorphous or glassy material or by additional crystalline constituents.

The introduction of Nd ions can be carried out using aqueous solutions of corresponding salts: NdCl₃, NdBr₃, NdI₃, Nd(NO₃)₃, Nd₂(SO₄)₃ etc. Alternatively, the introduction of dopant ions can be carried out during a mechanical mixture of Gadolinium containing powders, such as Gd₂O₂S, with insoluble compositions comprising the dopant, like oxides, for example Nd₂O₃.

Still alternatively Gadolinium containing powders, such as Gd₂O₂S powder, may be mechanically mixed with water insoluble salts of Nd, like NdF₃, Nd₂S₃, Nd₂O₂S, Nd₂(CO₃)₃, Nd₂(C₂O₄)₃ and the like.

The doped pigment powder of Gd₂O₂S may have a surface according to BET in the range of ≥ 0.01 m²/g and ≤ 1 m²/g, preferably of ≥ 0.05 m²/g and ≤ 0.5 m²/g and more preferably of ≥ 0.1 m²/g and ≤ 0.2 m²/g.

According to the present invention, the Nd³⁺ concentration in the host material is between ≥ 10 and ≤ 2000 wt. ppm, preferably ≥ 100 to ≤ 1000 wt. ppm and most preferred ≥ 500 to ≤ 1000 wt. ppm. These margins have shown in practice to be in order with the present invention.

A Gd₂O₂S: Nd fluorescent ceramic material according to the present invention may exhibit a relative light yield in the range of > 120% and preferably more than 230% of the light output of CdWO₄.

Light output and afterglow was measured with a Hamamatsu Photodiode and a National Instruments ADC. The afterglow was measured with 120 kV / 100 mA, 80 cm FDD (18-20 mGy/s), 2 s pulse. The signal values (light output) were measured on 4 x 4mm² pixels, silicone glued to a photodiode. The afterglow is measured after the X-ray pulse has been switched off.

The Gd₂O₂S: Nd fluorescent material may be transparent. It should be noted that the Gd₂O₂S: Nd fluorescent material can be yellow colored in case that Ce is present.

The transmission of the Gd₂O₂S: Nd fluorescent material at the wavelength of own emission in the spectral region 880- 1200 nm may be 10% to 70%, preferably 20% to 60% and more preferred ≥ 40% and most preferred ≥ 50%, with respect to a layer thickness of 1.6 mm. The measurements of total transmission were carried out using a Perkin Elmer spectrometer.

A further object of the present invention is directed to a Gadolinium containing pigment powder useful in the manufacture of a Gd₂O₂S: Nd fluorescent material according to the present invention.

The inventors have surprisingly found that a Gd₂O₂S: Nd fluorescent material with reduced afterglow can be obtained if a Gadolinium containing pigment powder is used which contains Nd as described above.

Preferably, the Gadolinium containing pigment powder can be selected from the group comprising Gd₂O₃, Gd₂O₂S and/or Gd₂O₂S: Nd

A method for the manufacture of a fluorescent ceramic material using hot-pressing may comprise the steps:
a) selecting a pigment powder of Gd₂O₂S : Nd as described above whereby the grain size of said powder used for hot-pressing is of 1 µm to 20 µm, and said hot-pressing is carried out at
   - a temperature of 1000° C to 1400° C; and/or
   - a pressure of 100 MPa to 300 MPa;
b) air annealing at a temperature of 700° C to 1200° C for a time period of 0.5 hours to 30 hours, and optional between step a) and step b) an additional step c) is carried out, whereby step c) comprises annealing fluorescent ceramic under vacuum at a temperature of 1000° C to 1400° C for a period of time of 0.5 hours to 30 hours.

It has been found out that relatively coarse grained powders which are chemically stable in air can be successfully pressed to form a fluorescent crystal with improved characteristics.

Thus, it can be preferred that the pressing mode is at
- a temperature of 1000° C to 1400° C, preferably of 1100° C to 1300° C, more preferably of 1150° C to 1250° C; and/or
- a pressure of 100 MPa to 300 MPa, preferably of 180 MPa to 280 MPa and more preferably of 200 MPa to 250 MPa. Preferably, the vacuum during the step of uni-axial pressing is ≤ 100 Pa and ≥ 0.01 Pa.

The vacuum can be adjusted in the range of ≥ 0.01 Pa and ≤ 50 Pa, preferred in the range of ≥ 0.01 Pa and ≤ 10 Pa and most preferred the vacuum is adjusted to the range of ≥ 0.01 Pa and < 1 Pa.

The fluorescent ceramic, after the step of hot-pressing under vacuum, can be further treated by air annealing at a temperature of 700° C to 1200° C, preferably of 800° C to 1100° C, more preferably of 900° C to 1000° C; whereby said time period for air annealing treatment is 0.5 hours to 30 hours, preferably 1 hours to 20 hours, more preferably 2 hours to 10 hours and most preferably 2 hours to 4 hours.

In an embodiment it is preferred that Gd₂O₂S pigment powder has an average grain size in the range of 1 µm to 20 µm, more preferred of 2 µm to 10 µm and most preferred of 4 µm to 6 µm.

It is advantageous to introduce the vacuum annealing step for still further improving optical properties of resulting ceramics. During this step a further grain growth in the ceramics takes place which further improves transparency due to a decrease in porosity. Next to this, due to the grain growth an additional diffusion of dopant atoms in the lattice of oxysulfide enables still further improving scintillating properties of the ceramics.

Therefore, according to one embodiment of the method between step a) and step b) an additional step c) can be carried out, whereby step c) comprises annealing fluorescent ceramic under vacuum at a temperature of 1000° C to 1400° C for a period of time of 0.5 hours to 30 hours.

Preferably, the annealing temperature is selected in the range of 1100° C to 1300° C, more preferably of 1200° C to 1250° C.

The time period for vacuum annealing can be preferably set to 1 hour to 20 hours, more preferably to 2 hours to 10 hours and most preferably 3 hours to 5 hours.

The present invention further relates to a detector arranged for detecting ionizing radiation, said detector comprising a fluorescent material as described in the present invention whereby the detector is preferably an X-ray detector, CT-detector or Electronic Portal Imaging detector .

The fluorescent material and/or the detector according to the present disclosure can be used for example in
- a scintillator or fluorescent member for detecting ionizing radiation, preferably x-rays, gamma rays and electron beams; and/or
- an apparatus or device used in the medical field, preferably for computed tomography (CT).

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

### BRIEF DESCRIPTION OF THE DRAWINGS

Additional details, characteristics and advantages of the object of the invention are disclosed in the subclaims, the figures and the following description of the respective figures and examples, which --in an exemplary fashion-- show preferred embodiments according to the invention.

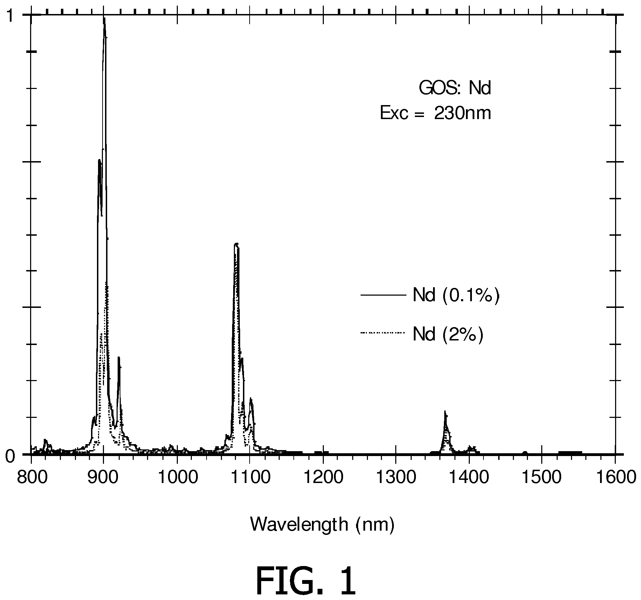

Fig. 1 shows two spectra of two different examples according to the present invention.

### EXAMPLE I

In the Example, a Gd₂O₂S:Nd pigment powder with a Nd concentration of 0.1 wt-% was used. 3kg of said pigment powder were admixed with 0,0055 g of LiF as sintering and/or flux aid.

First, the temperature was raised with approx. 20K/ min until 800 °C was reached, upon which a dwelling step of 25 min was performed. During part of the dwelling step, the pressure was raised by 2.5 MPa/min until approx 50 MPa was reached.

Afterwards, the temperature was again raised by 10K/min to reach 1050°C, followed by a simultaneous increase in temperature of 2K/min and pressure of 1 MPa/min until the maximum pressure of 150 MPa and the maximum temperature of 1250°C was reached.

At this point, the hot-pressing was performed for 240 min.

After the pressing was finished, first the pressure was reduced by 5 MPa/min and then the temperature by 3 K/min until ambient temperature and pressure were reached.

### EXAMPLE II:

A second Gd₂O₂S:Nd ceramic with a Nd content of 2 wt-% was made in the same way as Example I.

Fig. 1 shows the emission spectra of the material of Example I (straight line) and Example II (dotted line), whereby X-ray at 230 nm was used as incident light. It can be seen quite well that Nd as an activator fulfils the criteria for a successful use in CT and X-ray applications.

The particular combinations of elements and features in the above detailed embodiments are exemplary only; the interchanging and substitution of these teachings with other teachings in this and the patents/applications incorporated by reference are also expressly contemplated. As those skilled in the art will recognize, variations, modifications, and other implementations of what is described herein can occur to those of ordinary skill in the art without departing from the scope of the invention as claimed. Accordingly, the foregoing description is by way of example only and is not intended as limiting. The invention's scope is defined in the following claims and the equivalents thereto. Furthermore, reference signs used in the description and claims do not limit the scope of the invention as claimed.

## Claims

1. A detector arranged for detecting ionizing radiation, said detector comprising a Gd₂O₂S: Nd fluorescent material, wherein the Nd³⁺ concentration is between ≥ 10 and ≤ 2000 wt. ppm, wherein the detector is preferably an X-ray detector, CT-detector or Electronic Portal Imaging detector.

2. Use of a detector according to claim 1 in an apparatus adapted for medical imaging, wherein the detector is preferably an X-ray detector, CT-detector or Electronic Portal Imaging detector.

3. The detector according to claim 1, wherein the Gd₂O₂S: Nd material is a ceramic material.

## Patentansprüche

1. Detektor, der dafür eingerichtet ist, ionisierende Strahlung zu detektieren, wobei der Detektor ein Gd₂O₂S:Nd fluoreszierendes Material umfasst, wobei die Nd³⁺-Konzentration zwischen ≥ 10 und ≤ 2000 Gew.-ppm beträgt, wobei der Detektor vorzugsweise ein Röntgendetektor, CT-Detektor oder elektronischer Portalbilderzeugungs-Detektor ist.

2. Verwendung eines Detektors nach Anspruch 1 in einer Vorrichtung, die zur medizinischen Bilderzeugung angepasst ist, wobei der Detektor vorzugsweise ein Röntgendetektor, CT-Detektor oder elektronischer Portalbilderzeugungs-Detektor ist.

3. Detektor nach Anspruch 1, wobei das Gd₂O₂S:Nd-Material ein Keramikmaterial ist.

## Revendications

1. Détecteur disposé pour détecter un rayonnement ionisant, ledit détecteur comprenant un matériau fluorescent Gd₂O₂S:Nd, dans lequel la concentration en Nd³⁺ est comprise entre ≥ 10 et ≤ 2000 ppm en poids, où le détecteur est de préférence un détecteur de rayons X, un détecteur de tomodensitométrie ou un détecteur d'imagerie portale électronique.

2. Utilisation d'un détecteur selon la revendication 1 dans un appareil conçu pour l'imagerie médicale, dans laquelle le détecteur est de préférence un détecteur de rayons X, un détecteur de tomodensitométrie ou un détecteur d'imagerie portale électronique.

3. Détecteur selon la revendication 1, dans lequel le matériau Gd₂O₂S:Nd est un matériau céramique.
